# EUROPEAN PATENT APPLICATION

(11) **EP 4 708 626 A1**
(43) Date of publication of application: **11.03.2026**
(21) Application number: 25199593.2
(22) Date of filing: 02.09.2025
(51) Int. Cl.: H02J 7/50, H02J 7/60, H02J 7/80

(54) **DEVICE, SYSTEM, AND METHOD FOR MANAGING BATTERY**

(30) Priority: 09.09.2024 KR 20240122177
(71) Applicant: SAMSUNG SDI CO., LTD., Yongin-si, Gyeonggi-do 17084 (KR)
(72) Inventor: KO, Sungmin, Yongin-Si 17084 (KR)
(74) Representative: Marks & Clerk LLP

(57) **Abstract**

A battery management device includes: a detection circuit to detect state information indicating a state of a battery; and a control circuit to monitor the state of the battery based on the state information detected via the detection circuit, and control a function associated with the battery based on a result of the monitoring. The control circuit is further to open a load break switch electrically connected between the battery and a power conversion device in response to detecting that the battery is in an abnormal state during charging or discharging of the battery.

## Description

### BACKGROUND

### 1. Field

Aspects of embodiments of the present disclosure relate to a device, a system, and a method for managing batteries.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

Secondary batteries may be used as a battery pack including battery modules in which battery cells (e.g., a plurality of battery cells) are connected in series and/or in parallel. Further, a plurality of battery modules or battery packs may be connected in series/parallel to form a battery rack, and a plurality of battery racks may be connected in parallel to form a battery container. The battery container may be used as an energy storage system (ESS).

Energy storage systems may connect renewable energy sources, such as wind, solar power, or the like, having power generation output that cannot be controlled, to an existing power grid to charge or discharge energy according to a power consumption pattern. For example, a battery energy storage system using secondary batteries may be used not only to stabilize a system voltage and a frequency, but also to store surplus energy in conjunction with a renewable energy generation system having a power generation output that is not consistent, such as wind, solar power, or the like, and may discharge the energy stored in the batteries to supply energy to loads.

The above information disclosed in this Background section is for enhancement of understanding of the background of the present disclosure, and therefore, it may contain information that does not constitute related (or prior) art.

### SUMMARY

In an energy storage system, efficient management of the batteries may be desired. For example, by managing various matters, such as charging, discharging, and cell balancing of batteries, a service life of the batteries may be extended, and power may be stably supplied to loads. As such, the energy storage system may include a battery management device or a battery management system (BMS).

A battery management device or a battery management system may perform a protection operation (e.g., a protection mode or a failure mode) in response to a detection of an abnormal state of the battery or the battery container during the charging or discharging of the battery. However, comparative battery management devices or comparative battery management systems may open a DC contactor in a state in which the DC contactor that is electrically connected between the battery and a power conversion device (e.g., a power conversion system (PCS)) is under a load according to a protection operation, which may result in a decrease in a performance of the battery and the power conversion device. Accordingly, it may be desirable for a battery management device, a battery management system, and a battery management method that may control the opening of a DC contactor in a no-load state.

Embodiments of the present disclosure may be directed to a device, a system, and a method for managing batteries according to the above.

These and other aspects and features of the present disclosure will be described in or will be apparent from the following description of embodiments of the present disclosure.

According to one or more embodiments of the present disclosure, a battery management device includes: a detection circuit configured to detect state information indicating a state of a battery; and a control circuit configured to monitor the state of the battery based on the state information detected via the detection circuit, and control a function associated with the battery based on a result of the monitoring. The control circuit is further configured to open a load break switch electrically connected between the battery and a power conversion device in response to detecting that the battery is in an abnormal state during charging or discharging of the battery.

In an embodiment, the control circuit may be further configured to open a DC contactor electrically connected between the battery and the load break switch after the load break switch is opened.

In an embodiment, the control circuit may be configured to transmit a signal notifying in advance of opening the load break switch to a power management device via a communication circuit before opening the load break switch.

In an embodiment, the control circuit may be configured to open the load break switch when a time has elapsed since transmitting the signal.

According to one or more embodiments of the present disclosure, a battery management system includes: a power conversion device; a power management device; a first battery container; and a battery management device. The first battery container includes: a plurality of first batteries; a first detection device configured to detect first state information indicating a state of the first battery container; a first load break switch electrically connected between the plurality of first batteries and the power conversion device; and a plurality of first DC contactors electrically connected between the plurality of first batteries and the first load break switch. The first detection device is configured to open the first load break switch in response to detecting that the first battery container is in an abnormal state based on the first state information during charging or discharging of the plurality of first batteries.

In an embodiment, the battery management device may be configured to open a DC contactor associated with the abnormal state of the first battery container from among the plurality of first DC contactors after the first load break switch is opened.

In an embodiment, the first detection device may be configured to transmit a first signal indicating the abnormal state of the first battery container to the battery management device, and the battery management device may be configured to transmit a second signal notifying in advance of opening the first load break switch to the power management device in response to receiving the first signal.

In an embodiment, the power management device may be configured to adjust an output of the power conversion device to less than a value in response to receiving the second signal.

In an embodiment, the first detection device may be configured to open the first load break switch when a time has elapsed since transmitting the first signal.

In an embodiment, the battery management device may be included in the first battery container.

In an embodiment, the battery management system may further include a second battery container including: a plurality of second batteries; a second detection device configured to detect second state information indicating a state of the second battery container; a second load break switch electrically connected between the plurality of second batteries and the power conversion device; and a plurality of second DC contactors electrically connected between the plurality of second batteries and the second load break switch.

In an embodiment, the second detection device may be configured to open the second load break switch in response to detecting that the second battery container is in an abnormal state based on the second state information during charging or discharging of the plurality of second batteries.

In an embodiment, the battery management device may be configured to open a DC contactor associated with the abnormal state of the second battery container from among the plurality of second DC contactors after the second load break switch is opened.

In an embodiment, the second detection device may be configured to transmit a third signal indicating the abnormal state of the second battery container to the battery management device, and the battery management device may be configured to transmit a fourth signal notifying in advance of opening the second load break switch to the power management device in response to receiving the third signal.

In an embodiment, the power management device may be configured to adjust an output of the power conversion device to less than a value in response to receiving the fourth signal.

In an embodiment, the second detection device may be configured to open the second load break switch when a time has elapsed since transmitting the third signal.

According to one or more embodiments of the present disclosure, a method of managing a battery, includes: detecting state information indicating a state of a battery; monitoring the state of the battery based on the state information; and opening a load break switch electrically connected between the battery and a power conversion device in response to detecting that the battery is in an abnormal state during charging or discharging of the battery.

In an embodiment, the method may further include opening a DC contactor electrically connected between the battery and the load break switch after the load break switch is opened.

In an embodiment, the method may further include transmitting a signal notifying in advance of opening the load break switch to a power management device via a communication circuit before opening the load break switch.

In an embodiment, the opening of the load break switch may include opening the load break switch when a time has elapsed since transmitting the signal.

However, the present disclosure is not limited to the above aspects and features, and the above and additional aspects and features will be set forth, in part, in the detailed description that follows with reference to the drawings, and in part, may be apparent therefrom, or may be learned by practicing one or more of the presented embodiments of the present disclosure.
At least some of the above and other features of the invention are set out in the claims.

### BRIEF DESCRIPTION OF DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings, in which:
FIG. 1 is a block diagram illustrating a configuration of a battery management device according to one or more embodiments of the present disclosure;
FIG. 2 is a diagram illustrating a method of transmitting a signal notifying in advance of the opening of a load break switch to a power management device according to one or more embodiments of the present disclosure;
FIG. 3 is a table showing an example of a signal notifying in advance of the opening of a load break switch according to one or more embodiments of the present disclosure;
FIG. 4 is a diagram illustrating a configuration of a battery management system according to one or more embodiments of the present disclosure;
FIG. 5 is a diagram illustrating a configuration of a battery management system including a plurality of battery containers according to one or more embodiments of the present disclosure;
FIG. 6 is a signaling diagram illustrating a battery management method in a battery management system according to one or more embodiments of the present disclosure;
FIG. 7 is a table showing an example of signals transmitted and received in a battery management system according to one or more embodiments of the present disclosure;
FIG. 8 is a flow diagram illustrating a battery management method according to one or more embodiments of the present disclosure; and
FIG. 9 is a flow diagram illustrating a battery management method according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it will be understood that when an element is referred to as being "coupled," "linked" or "connected" to another element, the elements may be directly "coupled," "linked" or "connected" to each other, or an intervening element may be present therebetween, through which the element may be "coupled," "linked" or "connected" to another element. In addition, when a part is referred to as being "electrically coupled" to another part, the part can be directly connected to another part or an intervening part may be present therebetween such that the part and another part are indirectly connected to each other.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

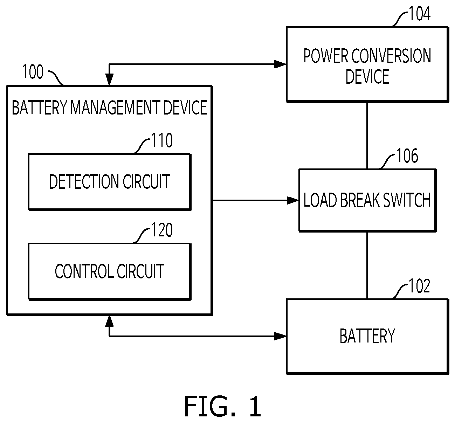

FIG. 1 is a block diagram illustrating a configuration of a battery management device 100 according to one or more embodiments of the present disclosure.

Referring to FIG. 1, the battery management device 100 may manage a battery 102. The battery management device 100 may include a detection circuit 110 and a control circuit 120. However, the configuration of the battery management device 100 is not limited thereto. According to various embodiments, the battery management device 100 may further include at least one other component in addition to the components described above. For example, the battery management device 100 may further include a balancing circuit (e.g., a balancing device) that performs a balancing operation of the battery 102, and battery modules and/or battery cells constituting the battery 102.

The detection circuit 110 (e.g., the detection device) may detect state information indicating a state (e.g., a voltage, a current, a temperature, and/or the like) of the battery 102. For example, the detection circuit 110 may detect the state of the battery 102, and may detect state information indicating the state of the battery. As an example, the detection circuit 110 may detect the voltage of each cell or each battery module constituting the battery 102. As another example, the detection circuit 110 may detect the current flowing through a battery module or each battery module constituting a battery pack. As another example, the detection circuit 110 may detect the temperature of cells, modules, and/or surroundings of at least one point of the battery 102.

The control circuit 120 (e.g., the control device) may monitor the state of the battery 102 based on the state information (e.g., the voltage, the current, the temperature, and/or the like) detected via the detection circuit 110, and may control functions associated with the battery 102 based on the results of the monitoring. For example, the control circuit 120 may receive the state information of the battery 102 from the detection circuit 110, and may monitor and calculate the voltage, the current, the temperature, a state of charge (SOC), a state of health (SOH), and/or the like of the battery 102 based on the received state information. Further, the control circuit 120 may perform a temperature control, a balancing control, a charge/discharge control, and/or the like based on the monitoring results. The control circuit 120 may perform a protection function (e.g., over-discharge, over-charge, over-current prevention, short-circuit, a fire extinguishing function, and/or the like) based on the monitoring results. Furthermore, the control circuit 120 may perform a wired or wireless communication function with one or more external devices (e.g., a higher-level controller, a vehicle, a charger, a power conversion device 104, and/or the like) of the battery 102, the battery module, or the battery pack.

According to one or more embodiments, the control circuit 120 may open a load break switch 106 (e.g., a disconnect switch unit (DSU)) electrically connected between the battery 102 and the power conversion device 104, in response to detecting that the battery 102 is in an abnormal state during the charging or discharging of the battery 102. The load break switch 106 may disconnect or connect a load current between the battery 102 and the power conversion device 104. For example, when the load break switch 106 electrically connected between the battery 102 and the power conversion device 104 is opened, a DC contactor electrically connected between the battery 102 and the power conversion device 104 may turn into a no-load state. Then, the control circuit 120 may open the DC contactor. Accordingly, if (e.g., when) the battery 102 is in an abnormal state, if (e.g., when) the load break switch 106 is opened first, and the DC contactor in the no-load state is opened after the load break switch 106 is opened, a performance of the battery 102 and the power conversion device 104 may not be degraded (e.g., damage may be minimized or reduced), and a protection operation of the battery 102 may be performed more safely. In some embodiments, the control circuit 120 may open the DC contactor in response to receiving a signal indicating the open state of the load break switch 106.

According to one or more embodiments, the control circuit 120 may transmit a signal notifying in advance of the opening of the load break switch 106 to a power management device (e.g., a power management system (PMS) or an energy management system (EMS)) via a communication circuit before opening the load break switch 106. The power management device may manage the power supplied to the system. For example, the power management device may manage the power of the battery management device 100, the power conversion device 104, and the battery 102. The signal notifying in advance of the opening of the load break switch 106 may include an open delay bit.

According to one or more embodiments, the power management device may adjust the output of the power conversion device 104 to less than a suitable value (e.g., a specified or predetermined value) when it receives the signal notifying in advance of the opening of the load break switch 106 from the control circuit 120. For example, the power management device may adjust the output of the power conversion device 104 to a zero value ('0') in response to receiving the signal notifying in advance of the opening of the load break switch 106. The adjusting of the output of the power conversion device 104 to a zero value may include interrupting a charging or a discharging. Further, if (e.g., when) the output of the power conversion device 104 is adjusted to a zero value, the DC contactor electrically connected between the battery 102 and the power conversion device 104 may turn into a no-load state. Then, the control circuit 120 may open the load break switch 106. Accordingly, when the battery 102 is in an abnormal state, the control circuit 120 may induce the power management device to adjust the output of the power conversion device 104 to a zero value by transmitting the signal notifying in advance of the opening of the load break switch 106 to the power management device. Then, the control circuit 120 may more safely perform the protection operation of the battery 102, without degrading the performance of the battery 102 and the power conversion device 104 (e.g., minimizing or reducing damage), by opening the load break switch 106 after the output of the power conversion device 104 is adjusted to a zero value, and opening the DC contactor in the no-load state after the load break switch 106 is opened.

According to one or more embodiments, the control circuit 120 may open the load break switch 106 when a suitable time (e.g., a specified or predetermined time, for example, such as 5 seconds) has elapsed since transmitting the signal notifying in advance of the opening of the load break switch 106. For example, the control circuit 120 may wait for a suitable time (e.g., a specified or predetermined time) after transmitting the signal notifying in advance of the opening of the load break switch 106 to the power management device. The time may include a time it takes for the power management device to receive the signal notifying in advance of the opening of the load break switch 106 and adjust the output of the power conversion device 104 to a zero value. Accordingly, the control circuit 120 may open the load break switch 106 after waiting for the time for the power management device to adjust the output of the power conversion device 104 to a zero value. In some embodiments, the control circuit 120 may open the DC contactor electrically connected between the battery 102 and the power conversion device 104 when a suitable time (e.g., a specified or predetermined time, such as, for example, 5 seconds) has elapsed since transmitting the signal notifying in advance of the opening of the load break switch 106.

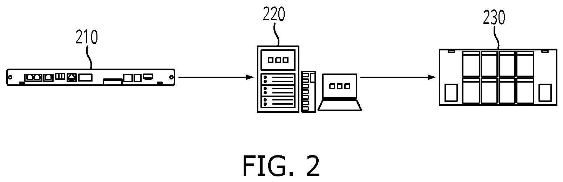

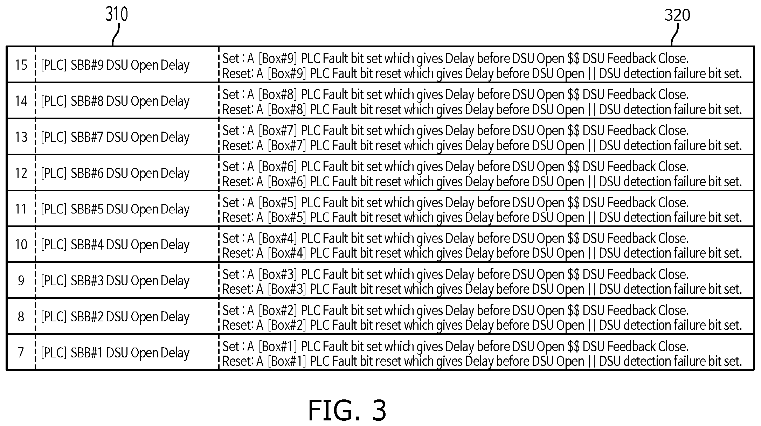

FIG. 2 is a diagram illustrating a method of transmitting a signal notifying in advance of the opening of a load break switch to a power management device 220 according to one or more embodiments of the present disclosure. FIG. 3 is a table showing an example of a signal notifying in advance of the opening of a load break switch according to one or more embodiments of the present disclosure.

Referring to FIGS. 2 and 3, a battery management device 210 (e.g., the battery management device 100 of FIG. 1) may transmit a signal notifying in advance of the opening of a load break switch (e.g., the load break switch 106 of FIG. 1) to the power management device 220 in response to detecting that a battery (e.g., the battery 102 of FIG. 1) is in an abnormal state. For example, the battery management device 210 may notify in advance of the opening of the load break switch to the power management device 220 before opening the load break switch. The load break switch may be connected electrically between the battery and the power conversion device 230, and may disconnect or connect the load current. Further, the signal notifying in advance of the opening of the load break switch may include an open delay bit. FIG. 3 shows an example of an instruction 320 for setting an open delay bit to a signal 310 notifying in advance of the opening of a load break switch for each battery container.

The power management device 220 may adjust the output of the power conversion device 230 to less than a suitable value (e.g., a specified or predetermined value) when it receives the signal notifying in advance of the opening of the load break switch from the battery management device 210. For example, the power management device 220 may adjust the output of the power conversion device 230 to a zero value in response to receiving the signal notifying in advance of the opening of the load break switch, and thus, may interrupt charging or discharging. Further, when the output of the power conversion device 230 is adjusted to a zero value, a DC contactor electrically connected between the battery and the power conversion device 230 may turn into a no-load state.

Then, the battery management device 210 may open the load break switch 106. In this case, the battery management device 210 may open the load break switch 106 if (e.g., when) a suitable time (e.g., a specified or predetermined time) (e.g., 5 seconds) has elapsed since transmitting the signal notifying in advance of the opening of the load break switch to the power management device 220. The time may be determined based on the time it takes from the time point when the signal notifying in advance of the opening of the load break switch is transmitted from the battery management device 210 to when the power management device 220 receives it, and the time it takes for the power management device 220 to adjust the output of the power conversion device 230 to a zero value. After the load break switch is opened, the battery management device 210 may open the DC contactor. According to one or more embodiments, the battery management device 210 may open the DC contactor in response to receiving a signal indicating an open state of the load break switch (e.g., a feedback signal from the load break switch). In some embodiments, the battery management device 210 may open the DC contactor when a suitable time (e.g., a specified or predetermined time) (e.g., 5 seconds) has elapsed since transmitting the signal notifying in advance of the opening of the load break switch.

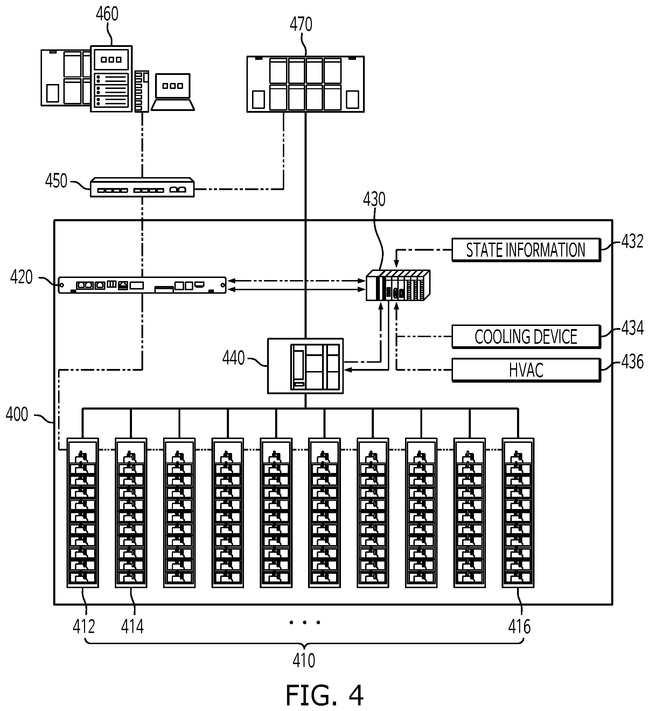

FIG. 4 is a diagram illustrating a configuration of a battery management system according to one or more embodiments of the present disclosure.

Referring to FIG. 4, the battery management system may include a battery container 400, a battery management device 420, a power management device 460, and a power conversion device 470. However, the configuration of the battery management system is not limited thereto. According to various embodiments, the battery management system may not include at least one of the components described above, and/or may further include at least one other components.

The battery container 400 may include a plurality of batteries 410 (e.g., the battery 102 of FIG. 1), a detection device 430, a load break switch 440, and a DC contactor. However, the configuration of the battery container 400 is not limited thereto. According to various embodiments, the battery container 400 need not include one or more of the components described above, and/or may further include at least one other component. For example, the battery management device 420 and/ or the power management device may be included in the battery container 400.

According to one or more embodiments, the plurality of batteries 410 may be composed of a plurality of battery racks 412, 414, and 416, in which battery modules in which battery cells are connected in series and/or parallel or battery packs including battery modules are connected in series/parallel. According to one or more embodiments, the plurality of battery racks 412, 414, and 416 may transmit and receive data or signals to and from the battery management device 420 by using a CAN (controller area network) communication protocol.

The detection device 430 may detect state information 432 indicating the states of the plurality of batteries 410 and the battery container 400. For example, the detection device 430 may detect the states of the plurality of batteries 410 and the battery container 400, and may detect the state information 432 indicating the states of the plurality of batteries 410 and the battery container 400. According to one or more embodiments, the detection device 430 may receive the state information 432 indicating the state of the battery container 400 from at least one of a cooling device 434, a heating, ventilation and air conditioning (HVAC) system 436, or a fire alarm control panel (FACP) included in or disposed adjacent to the battery container 400. In this case, the detection device 430 may transmit and receive data or signals to and from at least one of the cooling device 434, the HVAC system 436, or the FACP by using a serial communication protocol (e.g., RS485). According to one or more embodiments, the detection device 430 may include a programmable logic controller (PLC).

The detection device 430 may transmit the state information 432 to the battery management device 420. For example, the detection device 430 may collect information on an abnormal state (e.g., a failure state) occurring in the battery container 400, and may transmit the collected information to the battery management device 420. According to one or more embodiments, the detection device 430 may transmit and receive data or signals to and from the battery management device 420 by using a serial communication protocol (e.g., RS485).

The detection device 430 may control the on/off of the load break switch 440. According to one or more embodiments, the detection device 430 may open the load break switch 440 in response to detecting that the battery container 400 is in an abnormal state based on the state information 432 indicating the state of the battery container 400 during the charging or discharging of the plurality of batteries 410. According to one or more embodiments, the detection device 430 may open the load break switch 440 when a suitable time (e.g., a specified or predetermined time) (e.g., 5 seconds) has elapsed since transmitting a signal indicating the abnormal state of the battery container 400 to the battery management device 420.

The load break switch 440 may be electrically connected between the plurality of batteries 410 and the power conversion device 470, and thus, may disconnect or connect the load current. According to one or more embodiments, the load break switch 440 may include a DSU.

The DC contactor may be electrically connected between each of the plurality of batteries 410 and the load break switch 440. For example, the DC contactor may be provided in a plurality, and each of the plurality of DC contactors may be electrically connected between one of the plurality of batteries 410 and the load break switch 440.

The battery management device 420 may manage the plurality of batteries 410 and the battery container 400. The battery management device 420 may receive the state information 432 indicating the state of the battery container 400 from the detection device 430, and may monitor the state of the battery container 400 based on the received state information 432. Further, the battery management device 420 may control functions associated with the internal components of the battery container 400 (e.g., the plurality of batteries 410) based on the results of the monitoring.

According to one or more embodiments, the battery management device 420 may open a DC contactor associated with the abnormal state of the battery container 400 among the plurality of DC contactors after the load break switch 440 is opened. For example, the battery management device 420 may open a DC contactor associated with the abnormal state of the battery container 400 if (e.g., when) the load break switch 440 is opened and the plurality of DC contactors turns into a no-load state. Accordingly, if (e.g., when) the battery container 400 is in the abnormal state, if (e.g., when) the load break switch 440 is opened first and the DC contactor in the no-load state is opened after the load break switch 106 is opened, the performance of the plurality of batteries 410 and the power conversion device 470 may not be degraded (e.g., damage may be minimized or reduced), and the protection operation of the battery container 400 may be performed more safely. In some embodiments, the battery management device 420 may open a DC contactor associated with the abnormal state of the battery container 400 in response to receiving a signal indicating an open state of the load break switch 440.

According to one or more embodiments, the battery management device 420 may transmit a signal notifying in advance of the opening of the load break switch 440 to the power management device 460 if (e.g., when) it receives the signal indicating the abnormal state of the battery container 400 from the detection device 430. The signal notifying in advance of the opening of the load break switch 440 may include an open delay bit. According to one or more embodiments, the battery management device 420 may transmit and receive data or signals to and from the power management device 460 via a hub 450. In this case, the communication protocol used may include, for example, a Modbus TCP/IP communication protocol. In some embodiments, the battery management device 420 may open a DC contactor associated with the abnormal state of the battery container 400 if (e.g., when) a suitable time (e.g., a specified or predetermined time) (e.g., 5 seconds) has elapsed since transmitting the signal notifying in advance of the opening of the load break switch 440 to the power management device 460.

The power management device 460 may manage the power supplied to the battery management system. For example, the power management device 460 may manage the power of the components (e.g., the plurality of batteries 410) within the battery container 400, the battery management device 420, and the power conversion device 470.

According to one or more embodiments, the power management device 460 may adjust the output of the power conversion device 470 to less than a suitable value (e.g., a specified or predetermined value) when it receives the signal notifying in advance of the opening of the load break switch 440 from the battery management device 420. For example, the power management device 460 may adjust the output of the power conversion device 470 to a zero value, and thus, may interrupt charging or discharging in response to receiving the signal notifying in advance of the opening of the load break switch 440. In this case, when the output of the power conversion device 470 is adjusted to a zero value, the DC contactors may turn into a no-load state. Then, the battery management device 420 may open a DC contactor associated with the abnormal state of the battery container 400 when the plurality of DC contactors has turned into the no-load state. Accordingly, the performance of the plurality of batteries 410 and the power conversion device 470 may not be degraded (e.g., damage may be minimized or reduced), and the protection operation of the battery container 400 may be performed more safely.

The power conversion device 470 may convert a form of electric energy, and may supply it to suit the requirements of the power system. For example, the power conversion device 470 may convert an AC power from an external power source into a DC power, and may store (e.g., may charge) it in the plurality of batteries 410. The power conversion device 470 may convert the DC power stored in the plurality of batteries 410 into an AC power, and may supply (e.g., may discharge) it to an external system.

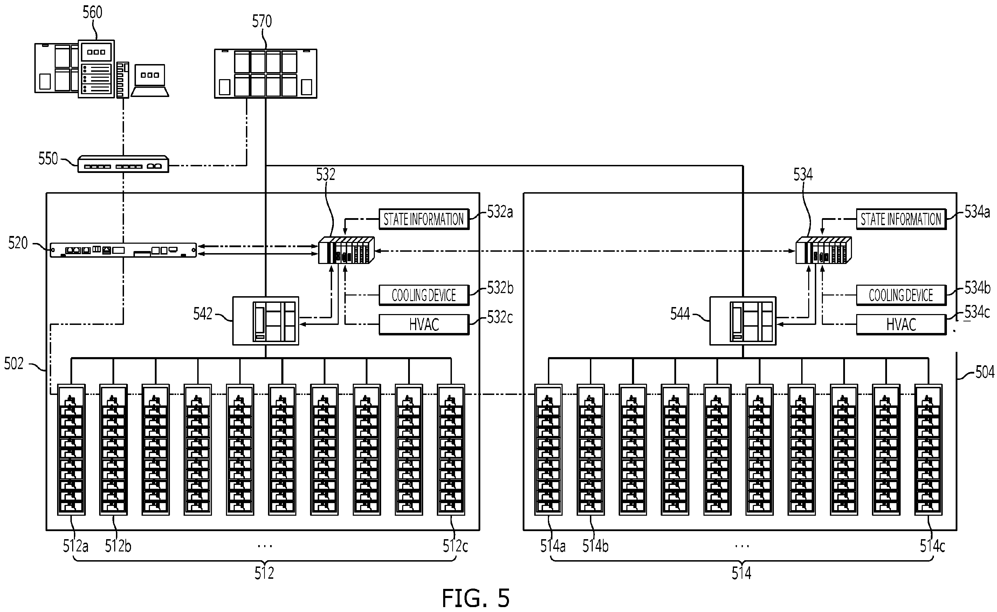

FIG. 5 is a diagram illustrating a configuration of a battery management system including a plurality of battery containers 502 and 504 according to one or more embodiments of the present disclosure. The battery management system illustrated in FIG. 5 may be an extended version of the battery management system described above with reference to FIG. 4. In FIG. 5, a structure in which the battery management system includes a plurality of battery containers 502 and 504 will be described in more detail, for convenience of illustration. Accordingly, redundant description of the configurations and the components in FIG. 5 that are the same or substantially the same as (or similar to) those described above with reference to FIG. 4 need not be repeated.

Referring to FIG. 5, the battery management system may include a plurality of battery containers 502 and 504 (e.g., a plurality of the battery container 400 of FIG. 4), a battery management device 520 (e.g., the battery management device 420 of FIG. 4), a power management device 560 (e.g., the power management device 460 of FIG. 4), and a power conversion device 570 (e.g., the power conversion device 470 of FIG. 4). However, the configuration of the battery management system is not limited thereto. According to various embodiments, the battery management system need not include at least one of the components described above, and/or may further include at least one other component.

Each of the plurality of battery containers 502 and 504 may include a plurality of batteries 512 or 514 (e.g., the plurality of batteries 410 of FIG. 4), a detection device 532 or 534, a load break switch 542 or 544, and a DC contactor. However, the configuration of each of the plurality of battery containers 502 and 504 is not limited thereto. According to various embodiments, each of the plurality of battery containers 502 and 504 may not include at least one of the components described above, and/or may further include at least one other component. Further, the structure in which the battery management system includes the first battery container 502 and the second battery container 504 is illustrated in FIG. 5, but the number of battery containers included in the battery management system is not limited thereto. For example, the battery management system may further include at least one other third battery container.

According to one or more embodiments, the plurality of batteries 512 and 514 included in each of the plurality of battery containers 502 and 504 may be composed of a plurality of battery racks 512a, 512b, 512c, 514a, 514b, and 514c. For example, the plurality of first batteries 512 included in the first battery container 502 may be composed of a plurality of battery racks 512a, 512b, and 512c. Further, the plurality of second batteries 514 included in the second battery container 504 may be composed of a plurality of battery racks 514a, 514b, and 514c.

According to one or more embodiments, the plurality of battery racks 512a, 512b, 512c, 514a, 514b, and 514c may transmit and receive data or signals to and from one another by using the CAN communication protocol. Further, the plurality of battery racks 512a, 512b, and 512c included in one battery container (e.g., the first battery container 502) of the plurality of battery containers 502 and 504 may transmit and receive data or signals to and from the battery management device 520 by using the CAN communication protocol. Moreover, the plurality of battery racks 514a, 514b, and 514c included in another battery container (e.g., the second battery container 504) of the plurality of battery containers 502 and 504 may not communicate directly with the battery management device 520, but may instead communicate with a neighboring plurality of battery racks 512a, 512b, and 512c by using an optical CAN communication protocol.

The detection devices 532 and 534 may detect state information 532a and 534a indicating the states of the plurality of batteries 512 and 514 and the battery containers 502 and 504. For example, the first detection device 532 included in the first battery container 502 may detect first state information 532a indicating the states of the plurality of first batteries 512 and the first battery container 502. Further, the second detection device 534 included in the second battery container 504 may detect second state information 534a indicating the states of the plurality of second batteries 514 and the second battery container 504. According to one or more embodiments, the detection devices 532 and 534 may receive the state information 532a and 534a indicating the states of the battery containers 502 and 504 from at least one of cooling devices 532b and 534b, HVAC systems 532c and 534c, or FACPs included in or disposed adjacent to the battery containers 502 and 504.

The detection devices 532 and 534 may transmit the state information 532a and 534a to the battery management device 520. As an example, the detection device 532 or 534 (e.g., the first detection device 532) included in one battery container (e.g., the first battery container 502) of the plurality of battery containers 502 and 504 may transmit the state information 532a or 534a (e.g., the first state information 532a) to the battery management device 520. As another example, the detection device 532 or 534 (e.g., the second detection device 534) included in another battery container (e.g., the second battery container 504) of the plurality of battery containers 502 and 504 may not transmit the state information 532a or 534a (e.g., the second state information 534a) directly to the battery management device 520, but may instead transmit it indirectly via a neighboring detection device 532 or 534 (e.g., the first detection device 532). In this case, the detection device 532 or 534 (e.g., the first detection device 532) that directly transmits the state information 532a or 534a to the battery management device 520 may be referred to as a master detection device, and the detection device 532 or 534 (e.g., the second detection device 534) that indirectly transmits the state information 532a or 534a to the battery management device 520 may be referred to as a slave detection device. The master detection device may communicate with the battery management device 520 by using a serial communication protocol (e.g., RS485), and the slave detection device may communicate with the master detection device by using a Modbus TCP/IP communication protocol. For example, the slave detection device may transmit the state information 532a or 534a (e.g., the second state information 534a) indicating the state of the battery container (e.g., the second battery container 504) including the slave detection device to the master detection device by using the Modbus TCP/IP communication protocol. Then, the master detection device may collect the state information 532a or 534a (e.g., the first state information 532a) indicating the state of the battery container (e.g., the first battery container 502) including the master detection device and the state information 532a or 534a (e.g., the second state information 534a) received from the slave detection device, and may transmit the collected information to the battery management device 520 by using the serial communication protocol (e.g., RS485).

The detection devices 532 and 534 may control the on/off of the load break switches 542 and 544. According to one or more embodiments, the detection devices 532 and 534 may open the load break switches 542 and 544 in response to detecting that the battery containers 502 and 504 are in an abnormal state based on the state information 532a and 534a indicating the states of the battery containers 502 and 504 during the charging or discharging of the plurality of batteries 512 and 514. For example, the first detection device 532 may open the first load break switch 542 in response to detecting that the first battery container 502 is in an abnormal state based on the first state information 532a indicating the state of the first battery container 502 during the charging or discharging of the plurality of first batteries 512. Further, the second detection device 534 may open the second load break switch 544 in response to detecting that the second battery container 504 is in an abnormal state based on the second state information 534a indicating the state of the second battery container 504 during the charging or discharging of the plurality of second batteries 514. According to one or more embodiments, the operation of the detection device 532 or 534 opening the load break switch 542 or 544 may be performed if (e.g., when) a suitable time (e.g., a specified or predetermined time) (e.g., 5 seconds) has elapsed after the detection device 532 or 534 has transmitted a signal indicating the abnormal state of the battery container 502 or 504 to the battery management device 520.

The load break switches 542 and 544 may be electrically connected between the plurality of batteries 512 and 514 and the power conversion device 570, and may disconnect or connect the load current. For example, the first load break switch 542 may be electrically connected between the plurality of first batteries 512 and the power conversion device 570, and may disconnect or connect the load current. Further, the second load break switch 544 may be electrically connected between the plurality of second batteries 514 and the power conversion device 570, and may disconnect or connect the load current.

The DC contactor may be electrically connected between each of the plurality of batteries 512 and 514 and the load break switches 542 and 544. For example, each of a plurality of first DC contactors may be electrically connected between a corresponding one of the plurality of first batteries 512 and the load break switch 542. Further, each of a plurality of second DC contactors may be electrically connected between a corresponding one of the plurality of second batteries 514 and the load break switch 544.

The battery management device 520 may manage the plurality of batteries 512 and 514 and the battery containers 502 and 504. According to one or more embodiments, the battery management device 520 may be included in one of the plurality of containers 502 and 504. For example, the battery management device 520 may be included in the first battery container 502.

According to one or more embodiments, the battery management device 520 may open DC contactors associated with the abnormal state of the battery containers 502 and 504 among the plurality of DC contactors after the load break switches 542 and 544 are opened. For example, the battery management device 520 may open DC contactors associated with the abnormal state of the battery containers 502 and 504 if (e.g., when) the load break switches 542 and 544 are opened and the plurality of DC contactors turns into a no-load state. As an example, the battery management device 520 may open a DC contactor associated with the abnormal state of the first battery container 502 among the plurality of first DC contactors after the first load break switch 542 is opened. As another example, the battery management device 520 may open a DC contactor associated with the abnormal state of the second battery container 504 among the plurality of second DC contactors after the second load break switch 544 is opened. Accordingly, if (e.g., when) the battery containers 502 and 504 are in the abnormal state, if (e.g., when) the load break switches 542 and 544 are opened first, and the DC contactors in the no-load state are opened after the load break switches 542 and 544 are opened, the performance of the plurality of batteries 512 and 514 and the power conversion device 570 may not be degraded (e.g., damage may be minimized or reduced), and the protection operation of the battery containers 502 and 504 may be performed more safely. In some embodiments, the battery management device 520 may open DC contactors associated with the abnormal state of the battery containers 502 and 504 in response to receiving a signal indicating the open state of the load break switches 542 and 544.

According to one or more embodiments, the battery management device 520 may transmit a signal notifying in advance of the opening of the load break switches 542 and 544 to the power management device 560 if (e.g., when) it receives the signal indicating the abnormal state of the battery containers 502 and 504 from the master detection device. For example, the battery management device 520 may transmit a signal notifying in advance of the opening of the first load break switch 542 to the power management device 560 if (e.g., when) it receives the signal indicating the abnormal state of the first battery container 502 from the master detection device. Further, the battery management device 520 may transmit a signal notifying in advance of the opening of the second load break switch 544 to the power management device 560 if (e.g., when) it receives the signal indicating the abnormal state of the second battery container 504 from the master detection device.

According to one or more embodiments, the battery management device 520 may transmit and receive data or signals to and from the power management device 560 via a hub 550. In this case, the communication protocol used may include, for example, a Modbus TCP/IP communication protocol. In some embodiments, the battery management device 520 may open DC contactors associated with the abnormal state of the battery containers 502 and 504 if (e.g., when) a suitable time (e.g., a specified or predetermined time) (e.g., 5 seconds) has elapsed since transmitting the signal notifying in advance of the opening of the load break switches 542 and 544 to the power management device 560.

The power management device 560 may manage the power supplied to the battery management system. According to one or more embodiments, the power management device 560 adjust the output of the power conversion device 570 to less than a suitable value (e.g., a specified or predetermined value) if (e.g., when) it receives the signal notifying in advance of the opening of the load break switches 542 and 544 from the battery management device 520. For example, the power management device 560 may adjust the output of the power conversion device 570 to a zero value, and thus, may interrupt charging or discharging in response to receiving the signal notifying in advance of the opening of the load break switches 542 and 544. In this case, if (e.g., when) the output of the power conversion device 570 is adjusted to a zero value, the DC contactors may turn into a no-load state. Then, the battery management device 520 may open DC contactors associated with the abnormal state of the battery containers 502 and 504 if (e.g., when) the plurality of DC contactors turns into a no-load state. Accordingly, the performance of the plurality of batteries 512 and 514 and the power conversion device 570 may not be degraded (e.g., damage may be minimized or reduced), and the protection operation of the battery containers 502 and 504 may be performed more safely.

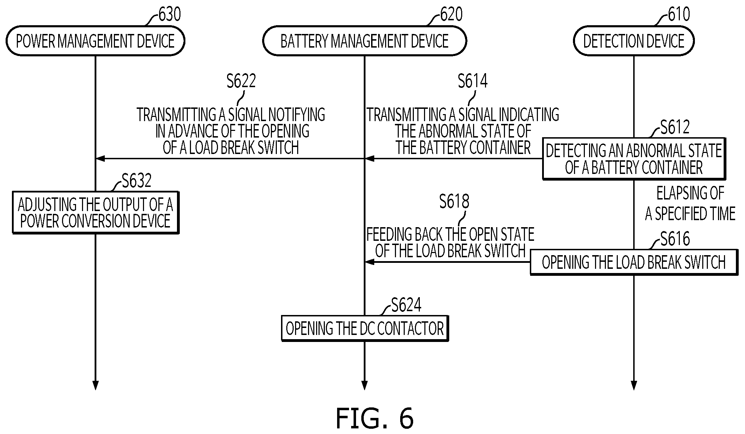

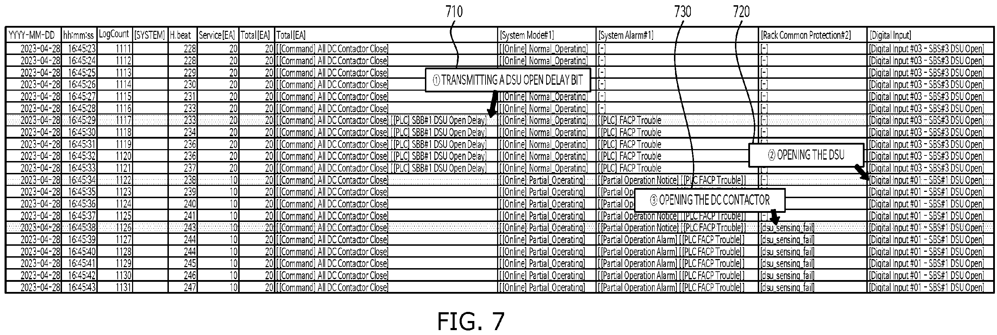

FIG. 6 is a signaling diagram illustrating a battery management method in a battery management system according to one or more embodiments of the present disclosure. FIG. 7 is a table showing an example of signals transmitted and received in a battery management system according to one or more embodiments of the present disclosure.

Referring to FIGS. 6 and 7, a detection device 610 (e.g., the detection device 430 of FIG. 4 or the detection devices 532 and 534 of FIG. 5) included in the battery management system may detect an abnormal state of a battery container (e.g., the battery container 400 of FIG. 4 or the battery containers 502 and 504 of FIG. 5) (S612). For example, the detection device 610 may detect an abnormal state of a battery container including the detection device 610.

If (e.g., when) an abnormal state of the battery container is detected, the detection device 610 may transmit a signal indicating the abnormal state of the battery container to a battery management device 620 (e.g., the battery management device 420 of FIG. 4 or the battery management device 520 of FIG. 5) (S614).

Upon receiving the signal indicating the abnormal state of the battery container, the battery management device 620 may transmit a signal notifying in advance of the opening of a load break switch (e.g., the load break switch 440 of FIG. 4 or the load break switches 542 and 544 of FIG. 5) to a power management device 630 (e.g., the power management device 460 of FIG. 4 or the power management device 560 of FIG. 5) (S622). The signal notifying in advance of the opening of the load break switch may include an open delay bit, such as a first signal 710 (e.g., the "DSU Open Delay bit" signal) shown in FIG. 7.

Upon receiving the signal notifying in advance of the opening of the load break switches 542 and 544, the power management device 630 may adjust the output of a power conversion device (e.g., the power conversion device 470 of FIG. 4 or the power conversion device 570 of FIG. 5) (S632). For example, the power management device 630 may adjust the output of the power conversion device to a zero value in response to receiving the signal notifying in advance of the opening of the load break switches.

When a suitable time (e.g., a specified or predetermined time) (e.g., 5 seconds) has elapsed since transmitting the signal indicating the abnormal state of the battery container, the detection device 610 may open the load break switch (S616). For example, the detection device 610 may transmit a second signal 720 (e.g., a "DSU Open" signal) shown in FIG. 7 to the load break switch, and thus, may open the load break switch if (e.g., when) a suitable time (e.g., a specified or predetermined time) has elapsed since transmitting the signal indicating the abnormal state of the battery container. Accordingly, if (e.g., when) the load break switch is opened, a DC contactor electrically connected between a battery (e.g., the battery 410 of FIG. 4 or the batteries 512 and 514 of FIG. 5) and the load break switch may turn into a no-load state.

When the load break switch is opened, the detection device 610 may feed back the open state of the load break switch to the battery management device 620 (S618). For example, the detection device 610 may transmit a feedback signal indicating the open state of the load break switch to the battery management device 620 after opening the load break switch.

Upon receiving the feedback signal indicating the open state of the load break switch, the battery management device 620 may open the DC contactor (S624). For example, the battery management device 620 may transmit a third signal 730 (e.g., a "DC Contactor Open" signal) shown in FIG. 7 to the DC contactor, and thus, may open the DC contactor in response to receiving the feedback signal indicating the open state of the load break switch. Accordingly, the battery management system may more safely perform a protection operation of the battery container, while minimizing or reducing damage to the internal components of the battery management system by turning the DC contactor into a no-load state and opening the DC contactor in the no-load state if (e.g., when) the battery container is in an abnormal state.

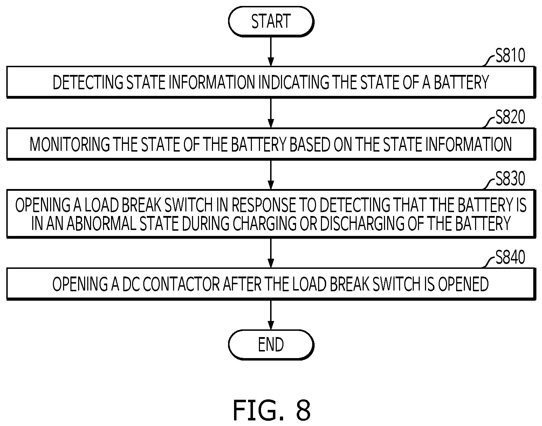

FIG. 8 is a flow diagram illustrating a battery management method according to one or more embodiments of the present disclosure.

Referring to FIG. 8, the method may start, and a battery management device (e.g., the battery management device 100 of FIG. 1) may detect state information indicating the state of a battery (e.g., the battery 102 of FIG. 1) (S810).

The battery management device may monitor the state of the battery based on the state information (S820).

The battery management device may open a load break switch (e.g., the load break switch 106 of FIG. 1) in response to detecting that the battery is in an abnormal state during charging or discharging of the battery (S830). For example, the battery management device may open a load break switch electrically connected between the battery and a power conversion device (e.g., the power conversion device 104 of FIG. 1) in response to detecting that the battery is in an abnormal state during charging or discharging of the battery.

The battery management device may open a DC contactor after the load break switch is opened (S840), and the method may end. For example, the battery management device may open a DC contactor electrically connected between the battery and the load break switch after the load break switch is opened.

The battery management method described above may be applied to a battery management system too in the same or similar manner. For example, in S810, the battery management system (e.g., the battery management system of FIG. 4 or the battery management system of FIG. 5) may detect state information indicating the state of a battery container (e.g., the battery container 400 of FIG. 4 or the battery containers 502 and 504 of FIG. 5). Then, the battery management system may monitor the state of the battery container based on the state information in S820, and may open a load break switch (e.g., the load break switch 440 of FIG. 4 or the load break switches 542 and 544 of FIG. 5) in response to detecting that the battery container is in an abnormal state during charging or discharging of the battery in S830. Then, in S840, the battery management system may open a DC contactor associated with the abnormal state of the battery container after the load break switch is opened, and the method may end.

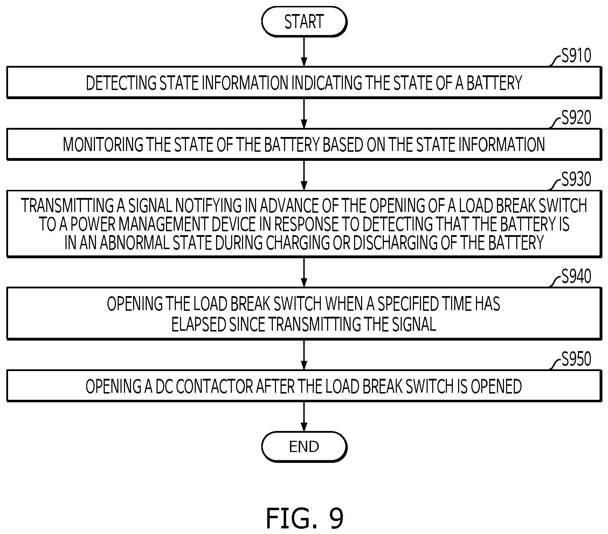

FIG. 9 is a flow diagram illustrating a battery management method according to one or more embodiments of the present disclosure.

Referring to FIG. 9, the method may start, and a battery management device (e.g., the battery management device 100 of FIG. 1) may detect state information indicating the state of a battery (e.g., the battery 102 of FIG. 1) (S910).

The battery management device may monitor the state of the battery based on the state information (S920).

The battery management device may transmit a signal notifying in advance of the opening of a load break switch (e.g., the load break switch 106 of FIG. 1) to a power management device in response to detecting that the battery is in an abnormal state during charging or discharging of the battery (S930). For example, the battery management device may transmit the signal notifying in advance of the opening of the load break switch to the power management device via a communication circuit before opening the load break switch. Upon receiving the signal notifying in advance of the opening of the load break switch, the power management device may adjust the output of a power conversion device (e.g., the power conversion device 104 of FIG. 1) to less than a suitable value (e.g., a specified or predetermined value). For example, the power management device may adjust the output of the power conversion device to a zero value.

The battery management device may open the load break switch if (e.g., when) a suitable time (e.g., a specified or predetermined time) (e.g., 5 seconds) has elapsed since transmitting the signal notifying in advance of the opening of the load break switch (S940). For example, the battery management device may wait for a suitable time (e.g., a specified or predetermined time) for the output of the power conversion device to be adjusted to less than the value, and may open the load break switch regardless of whether or not the output of the power conversion device is adjusted if (e.g., when) the time has elapsed.

The battery management device may open a DC contactor after the load break switch is opened (S950), and the method may end. For example, the battery management device may open the DC contactor electrically connected between the battery and the load break switch after the load break switch is opened.

The battery management method described above may be applied to a battery management system too in the same or similar manner. For example, in S910, the battery management system (e.g., the battery management system of FIG. 4 or the battery management system of FIG. 5) may detect state information indicating the state of a battery container (e.g., the battery container 400 of FIG. 4 or the battery containers 502 and 504 of FIG. 5). Then, the battery management system may monitor the state of the battery container based on the state information in S920, and may transmit a signal notifying in advance of the opening of a load break switch (e.g., the load break switch 440 of FIG. 4 or the load break switches 542 and 544 of FIG. 5) to a power management device (e.g., the power management device 460 of FIG. 4 or the power management device 560 of FIG. 5) in response to detecting that the battery container is in an abnormal state during charging or discharging of the battery in S930. In this case, upon receiving the signal notifying in advance of the opening of the load break switch, the power management device may adjust the output of a power conversion device (e.g., the power conversion device 470 of FIG. 4 or the power conversion device 570 of FIG. 5) to less than a suitable value (e.g., a specified or predetermined value). For example, the power management device may adjust the output of the power conversion device to a zero value. Then, in S940, the battery management system may open the load break switch if (e.g., when) a suitable time (e.g., a specified or predetermined time) (e.g., 5 seconds) has elapsed since transmitting the signal notifying in advance of the opening of the load break switch. For example, the battery management system may wait for a suitable time (e.g., a specified or predetermined time) for the output of the power conversion device to be adjusted to less than the value, and may open the load break switch regardless of whether or not the output of the power conversion device is adjusted if (e.g., when) the time has elapsed. Then, in S950, the battery management system may open a DC contactor associated with the abnormal state of the battery container after the load break switch is opened, and the method may end.

According to some embodiments of the present disclosure, by controlling the opening of the DC contactor in the no-load state, it may be possible to support a protection operation to be performed more safely in the abnormal state of the battery or the battery container, without degrading the performance of the battery and the power conversion device.

However, the aspects and features of the present disclosure are not limited to those described above, and other aspects and features not expressly described herein will be clearly understood by a person skilled in the art from the description of example embodiments of the present disclosure described below.

Although the present disclosure has been described with reference to embodiments and drawings illustrating aspects thereof, the present disclosure is not limited thereto. Various modifications and variations can be made by a person skilled in the art to which the present disclosure belongs within the scope of the present disclosure and the claims and their equivalents, below.

### DESCRIPTION OF SOME REFERENCE SYMBOLS

100: Battery management device
102: Battery
104: Power conversion device
106: Load break switch
110: Detection circuit
120: Control circuit
Embodiments are set out in the following numbered clauses:
Clause 1. A battery management device comprising: a detection circuit configured to detect state information indicating a state of a battery; and a control circuit configured to monitor the state of the battery based on the state information detected via the detection circuit, and control a function associated with the battery based on a result of the monitoring, wherein the control circuit is further configured to open a load break switch electrically connected between the battery and a power conversion device in response to detecting that the battery is in an abnormal state during charging or discharging of the battery.
Clause 2. The battery management device of clause 1, wherein the control circuit is further configured to open a DC contactor electrically connected between the battery and the load break switch after the load break switch is opened.
Clause 3. The battery management device of clause 1 or 2, wherein the control circuit is configured to transmit a signal notifying in advance of opening the load break switch to a power management device via a communication circuit before opening the load break switch.
Clause 4. The battery management device of clause 3, wherein the control circuit is configured to open the load break switch when a time has elapsed since transmitting the signal.
Clause 5. A battery management system comprising: a power conversion device; a power management device; a first battery container; and a battery management device, wherein the first battery container comprises: a plurality of first batteries; a first detection device configured to detect first state information indicating a state of the first battery container; a first load break switch electrically connected between the plurality of first batteries and the power conversion device; and a plurality of first DC contactors electrically connected between the plurality of first batteries and the first load break switch, and wherein the first detection device is configured to open the first load break switch in response to detecting that the first battery container is in an abnormal state based on the first state information during charging or discharging of the plurality of first batteries.
Clause 6. The battery management system of clause 5, wherein the battery management device is configured to open a DC contactor associated with the abnormal state of the first battery container from among the plurality of first DC contactors after the first load break switch is opened.
Clause 7. The battery management system of clause 5 or 6, wherein the first detection device is configured to transmit a first signal indicating the abnormal state of the first battery container to the battery management device, and the battery management device is configured to transmit a second signal notifying in advance of opening the first load break switch to the power management device in response to receiving the first signal.
Clause 8. The battery management system of clause 7, wherein the power management device is configured to adjust an output of the power conversion device to less than a value in response to receiving the second signal.
Clause 9. The battery management system of clause 7 or 8, wherein the first detection device is configured to open the first load break switch when a time has elapsed since transmitting the first signal.
10. The battery management system of any one of clauses 5 to 9, wherein the battery management device is comprised in the first battery container.
11. The battery management system of any one of clauses 5 to 10, further comprising a second battery container comprising: a plurality of second batteries; a second detection device configured to detect second state information indicating a state of the second battery container; a second load break switch electrically connected between the plurality of second batteries and the power conversion device; and a plurality of second DC contactors electrically connected between the plurality of second batteries and the second load break switch.
12. The battery management system of clause 11, wherein the second detection device is configured to open the second load break switch in response to detecting that the second battery container is in an abnormal state based on the second state information during charging or discharging of the plurality of second batteries.
13. The battery management system of clause 12, wherein the battery management device is configured to open a DC contactor associated with the abnormal state of the second battery container from among the plurality of second DC contactors after the second load break switch is opened.
14. The battery management system of clause 12 or 13, wherein the second detection device is configured to transmit a third signal indicating the abnormal state of the second battery container to the battery management device, and the battery management device is configured to transmit a fourth signal notifying in advance of opening the second load break switch to the power management device in response to receiving the third signal.
15. The battery management system of clause 14, wherein the power management device is configured to adjust an output of the power conversion device to less than a value in response to receiving the fourth signal.
16. The battery management system of clause 14 or 15, wherein the second detection device is configured to open the second load break switch when a time has elapsed since transmitting the third signal.
17. A method of managing a battery, comprising: detecting state information indicating a state of a battery; monitoring the state of the battery based on the state information; and opening a load break switch electrically connected between the battery and a power conversion device in response to detecting that the battery is in an abnormal state during charging or discharging of the battery.
18. The method of clause 17, further comprising opening a DC contactor electrically connected between the battery and the load break switch after the load break switch is opened.
19. The method of clause 17 or 18, further comprising transmitting a signal notifying in advance of opening the load break switch to a power management device via a communication circuit before opening the load break switch.
20. The method of clause 19, wherein the opening of the load break switch comprises opening the load break switch when a time has elapsed since transmitting the signal.

## Claims

1. A battery management device (100, 210, 420, 520, 620) comprising:
a detection circuit (110) configured to detect state information indicating a state of a battery (102, 410, 512, 514); and
a control circuit (120) configured to monitor the state of the battery (102, 410, 512, 514) based on the state information detected via the detection circuit (110), and control a function associated with the battery (102, 410, 512, 514) based on a result of the monitoring,
wherein the control circuit (120) is further configured to open a load break switch (106, 440, 542, 544) electrically connected between the battery (102, 410, 512, 514) and a power conversion device (104, 230, 470, 570) in response to detecting that the battery (102, 410, 512, 514) is in an abnormal state during charging or discharging of the battery (102, 410, 512, 514).

2. The battery management device (100, 210, 420, 520, 620) as claimed in claim 1, wherein the control circuit (120) is further configured to open a DC contactor electrically connected between the battery (102, 410, 512, 514). and the load break switch (106, 440, 542, 544) after the load break switch (106, 440, 542, 544) is opened.

3. The battery management device (100, 210, 420, 520, 620) as claimed in claim 1 or 2, wherein the control circuit (120) is configured to transmit a signal notifying in advance of opening the load break switch (106, 440, 542, 544) to a power management device (220, 460, 560, 630) via a communication circuit before opening the load break switch (106, 440, 542, 544).

4. The battery management device (100, 210, 420, 520, 620) as claimed in claim 3, wherein the control circuit (120) is configured to open the load break switch (106, 440, 542, 544) when a time has elapsed since transmitting the signal.

5. A battery management system comprising:
a power conversion device (104, 230, 470, 570);
a power management device (220, 460, 560, 630);
a first battery container (502); and
a battery management device (100, 210, 420, 520, 620) as claimed in any one of claims 1 to 4.

6. The battery management system as claimed in claim 5, wherein the first battery container (502) comprises:
a plurality of first batteries (512);
a first detection device (532) configured to detect first state information indicating a state of the first battery container (502);
a first load break switch (542) electrically connected between the plurality of first batteries (512) and the power conversion device (104, 230, 470, 570); and
a plurality of first DC contactors electrically connected between the plurality of first batteries (512) and the first load break switch (542), and
wherein the first detection device (532) is configured to open the first load break switch (542) in response to detecting that the first battery container (502) is in an abnormal state based on the first state information during charging or discharging of the plurality of first batteries (512).

7. The battery management system as claimed in claim 5 or 6, wherein the battery management device (100, 210, 420, 520, 620) is configured to open a DC contactor associated with the abnormal state of the first battery container (502) from among the plurality of first DC contactors after the first load break switch (542) is opened.

8. The battery management system as claimed in claim 5, 6, or 7, wherein the first detection device (532) is configured to transmit a first signal indicating the abnormal state of the first battery container (502) to the battery management device (100, 210, 420, 520, 620), and
the battery management device (100, 210, 420, 520, 620) is configured to transmit a second signal notifying in advance of opening the first load break switch (542) to the power management device (220, 460, 560, 630) in response to receiving the first signal.

9. The battery management system as claimed in claim 8, wherein the power management device (220, 460, 560, 630) is configured to adjust an output of the power conversion device (104, 230, 470, 570) to less than a value in response to receiving the second signal, optionally wherein the first detection device (532) is configured to open the first load break switch (542) when a time has elapsed since transmitting the first signal.

10. The battery management system as claimed in any one of claims 5 to 9, further comprising a second battery container (504) comprising:
a plurality of second batteries (514);
a second detection device (534) configured to detect second state information indicating a state of the second battery container (504);
a second load break switch (544) electrically connected between the plurality of second batteries (514) and the power conversion device (104, 230, 470, 570); and
a plurality of second DC contactors electrically connected between the plurality of second batteries (514) and the second load break switch (544).

11. The battery management system as claimed in claim 10, wherein the second detection device (534) is configured to open the second load break switch (544) in response to detecting that the second battery container (504) is in an abnormal state based on the second state information during charging or discharging of the plurality of second batteries (514).

12. The battery management system as claimed in claim 11, wherein the battery management device (100, 210, 420, 520, 620) is configured to open a DC contactor associated with the abnormal state of the second battery container (504) from among the plurality of second DC contactors after the second load break switch (544) is opened.

13. The battery management system as claimed in claim 11 or 12, wherein the second detection device (534) is configured to transmit a third signal indicating the abnormal state of the second battery container (504) to the battery management device (100, 210, 420, 520, 620), and
the battery management device (100, 210, 420, 520, 620) is configured to transmit a fourth signal notifying in advance of opening the second load break switch (544) to the power management device (220, 460, 560, 630) in response to receiving the third signal.

14. The battery management system as claimed in claim 13, wherein the power management device (220, 460, 560, 630) is configured to adjust an output of the power conversion device (104, 230, 470, 570) to less than a value in response to receiving the fourth signal, and optionally
wherein the second detection device (534) is configured to open the second load break switch (544) when a time has elapsed since transmitting the third signal.

15. A method of managing a battery (102, 410, 512, 514), comprising:
detecting state information indicating a state of a battery (102, 410, 512, 514);
monitoring the state of the battery (102, 410, 512, 514) based on the state information; and
opening a load break switch (106, 440, 542, 544) electrically connected between the battery (102, 410, 512, 514) and a power conversion device (104, 230, 470, 570) in response to detecting that the battery (102, 410, 512, 514) is in an abnormal state during charging or discharging of the battery (102, 410, 512, 514).
